# FASCICULE DE BREVET EUROPEEN

(11) **EP 0 652 662 B1**
(45) Date de publication et mention de la délivrance du brevet: **16.12.1998**
(21) Numéro de dépôt: 94460034.5
(22) Date de dépôt: 30.09.1994
(51) Int. Cl.: H04L 12/56

(54) **Système de files d'attente en entrée prévu notamment pour être relié aux entrées d'une matrice de commutation de type spatial sans blocage**
Anordnung für Warteschlangen zur Verwendung in der Eingangsstufe einer nicht blockierenden Raumschaltmatrix
Waiting queues arrangement to be used at the input stage of a non-blocking space-switching matrix

(30) Priorité: 20.10.1993 FR 9312720
(43) Date de publication de la demande: 10.05.1995
(73) Titulaire: FRANCE TELECOM, 75015 Paris (FR)
(72) Inventeur: Boyer, Pierre, F-22300 Lannion (FR); Servel, Michel, F-22300 Lannion (FR); Coudreuse, Jean-Pierre, F-22300 Lannion (FR)
(74) Mandataire: Maillet, Alain

(56) Documents cités:
- EP-A- 0 156 580
- WO-A-88/04870
- IEEE JOURNAL ON SOLID STATE CIRCUITS, vol.25, no.6, Décembre 1990, USA pages 1433 - 1439 M. AKATA ET AL. 'A 250 MB/S 32*32 CMOS CROSSPOINT LSI FOR ATM SWITCHING SYSTEMS'
- IEEE INFOCOM 1992, vol.1, 1992, USA pages 359 - 363 M.J. KAROL ET AL. 'IMPROVING THE PERFORMANCE OF INPUT-QUEUED ATM PACKET SWITCHES'

## Description

La présente invention concerne un système de files d'attente en entrée prévu notamment pour être relié aux entrées d'une matrice de commutation de type spatial sans blocage.

Les réseaux de commutation temporel asynchrone se divisent en plusieurs catégories parmi lesquelles essentiellement deux classes principales ressortent. La première est fondée sur l'utilisation de matrices de commutation spaciales sans blocage suivies par des files d'attente associées aux sorties. Les commutateurs dits de type COPRIN sont des représentants typiques de cette catégorie. La seconde catégorie utilise au contraire des files d'attente aux entrées suivies de commutateurs spatiaux sans blocage, par exemple des matrices de commutation de type dit de "BATCHER BANYAN".

Les réseaux de la première catégorie présentent l'avantage indéniable de minimiser les temps d'attente et la gigue tout en acceptant, de par leur principe, une charge interne relativement élevée.

Cependant, tout le contenu des cellules doit être transféré dans ce qu'on pourrait appeler un supermultiplex qui limite les possibilités de commutation sans blocage lorsque des débits relativement élevés sont utilisés. Par exemple, des débits de l'ordre de 20 Gbit/s peuvent être envisagés en employant la technologie la plus récente. Il faut noter que dans bien des applications, une telle technologie est satisfaisante.

Néanmoins, au-delà de ces débits, il faut faire appel à une mise en étages des matrices qui conduit généralement à une multiplication des files d'attente traversées par les cellules. Le blocage à l'établissement des communications apparaît aussi, mais étant donné le grand débit des multiplex et le grand nombre de circuits virtuels traités par multiplex, ce paramètre ne pose pas trop de problèmes.

Les réseaux de la seconde catégorie présentent jusqu'à aujourd'hui l'inconvénient de ne pas prendre en compte la possibilité de diffusion des cellules lors de la commutation sans devoir ajouter un nombre important de circuits pour effectuer les mémorisations et les copies de cellules. Par ailleurs, ils n'acceptent intrinsèquement qu'une charge limitée à 0,59. Ils produisent également un retard et une dispersion de délais de traversée plus importants que la première catégorie et ils exigent, cela dépend en fait du mode de réalisation, un plus grand nombre d'interconnexions, étant donné le plus grand nombre d'étages.

Des solutions plus ou moins satisfaisantes ont été proposées pour passer outre ces limitations mais ces propositions s'avèrent être très souvent extrêmement coûteuses. Parmi les propositions les plus récentes, l'une d'elle est fondée sur l'utilisation d'une mémoire adressable par son contenu, mémoire dite aussi mémoire CAM (Content Adressable Memory). Elle s'avère être plus intéressante que les autres car elle propose de transformer la file d'entrée associée à une matrice de "BATCHER BANYAN" en une file d'attente dans laquelle la cellule entrée la première sort à un instant dépendant de la résolution des conflits occasionnés par les différentes demandes d'accès à la même sortie issues des autres entrées. Pendant un temps cellule, les demandes d'accès aux sorties sont concentrées vers un circuit de traitement des demandes qui est prévu pour, au cours de ce même temps cellule, fournir, à chaque file d'entrée, le premier intervalle de temps cellule disponible sur la sortie demandée, compte tenu des autres demandes.

Cette proposition est notamment décrite dans l'article intitulé "A Scheduling Content-Adressable Memory for ATM Space Division Switch Control" paru dans IEEE International Solid-State Circuits Conférence de 1991, page 244 aux noms de Masao Akata et al, NEC Corporation, Japan.

Pour situer les performances de ce dispositif, sa réalisation, malgré une amélioration de la mémoire CAM, conduit à un temps d'analyse triple du temps requis pour l'accès à une mémoire statique à double accès réalisée dans la même technologie. L'inconvénient de cette technique est d'exiger un circuit spécifique dont le principe de fonctionnement est relativement complexe, et qui, en conséquence, limite le débit global commuté.

Le but de la présente invention est de proposer un système de files d'attente en entrée de la seconde catégorie qui permette de fournir un ordre proche de l'ordre de sortie correspondant à la première catégorie de réseaux, mais qui puisse fonctionner à des vitesses plus élevées que ces réseaux. Ainsi, on a cherché à multiplier par quatre le débit global commuté, ceci à technologie équivalente.

A cet effet, un système de files d'attente en entrée selon l'invention est prévu pour être relié aux entrées d'une matrice de commutation et est caractérisé en ce qu'il comporte une succession de circuits d'entrée dont des entrées respectives sont prévues pour recevoir des cellules du type de celles qui sont utilisées dans un système de transmission de données et/ou du type ATM et dont les sorties sont respectivement reliées aux entrées correspondantes de la matrice de commutation, chaque circuit d'entrée comportant encore une pluralité d'entrées en relation biunivoque avec les sorties de la matrice de commutation, chacune desdites entrées portant, pendant chaque temps cellule, une série de signaux de disponibilité auxquels sont respectivement affectés des temps cellule postérieurs au temps cellule en cours, chaque signal de disponibilité marquant un état de disponibilité de la sortie de la matrice qui correspond à l'entrée qui le porte pour l'émission d'une cellule au temps cellule qui est affecté audit signal, chaque circuit d'entrée comprenant des moyens pour mémoriser, dans une case d'une mémoire, une cellule qui est présente sur son entrée à une adresse qui est en relation avec un temps cellule affecté à un signal de disponibilité marquant un état disponible pour l'émission de ladite cellule sur la sortie de la matrice à laquelle est destinée ladite cellule, ledit signal de disponibilité marquant alors, après ladite mémorisation, un état de non-disponibilité, et des moyens pour lire ladite mémoire à une adresse correspondant au temps cellule en cours afin de délivrer, à ladite matrice de commutation, la cellule qui est stockée à cette adresse.

Selon une autre caractéristique de l'invention, dans chaque circuit d'entrée, les signaux de disponibilité portés, pendant un temps cellule, par une entrée sont respectivement présents sur ladite entrée pendant des micro-intervalles de temps qui subdivisent chaque temps cellule et auxquels sont respectivement affectés les temps cellule postérieurs au temps cellule en cours.

Selon une autre caractéristique de l'invention, lesdits micro-intervalles sont déterminés par des signaux délivrés par une base de temps, l'adresse de mémorisation de la cellule présente sur l'entrée dudit circuit d'entrée étant déterminée à partir de la valeur prise par lesdits signaux de micro-intervalle de temps lorsque le signal de disponibilité sur l'entrée correspondant à la sortie de la matrice de commutation à laquelle est destinée la cellule en cours marque un état disponible.

Selon une autre caractéristique de l'invention, chaque circuit d'entrée comprend une mémoire pour mémoriser la cellule qui est présente sur son entrée, ladite mémoire étant adressée en lecture par un signal d'heure locale délivré par ladite base de temps, lesdits signaux de micro-intervalles de temps délivrés par la base de temps adressant alors ladite mémoire en écriture.

Selon une autre caractéristique de l'invention, il comporte des moyens pour empêcher la mémorisation d'une cellule déjà mémorisée.

Selon une autre caractéristique de l'invention, chaque circuit d'entrée est pourvu de m sorties correspondant aux m entrées et sur lesquelles sont délivrés des signaux de disponibilité remis à jour, les m sorties d'un circuit d'entrée étant reliées aux m entrées du circuit d'entrée suivant dans la succession de circuits d'entrée.

Selon une autre caractéristique de l'invention, les signaux de disponibilité remis à jour délivrés sur les m sorties d'un circuit d'entrée sont transmis aux m entrées du circuit d'entrée suivant dans la succession avec un retard d'une durée égale à celle d'un micro-intervalle de temps, la base de temps d'un circuit d'entrée étant décalée de la durée d'un micro-intervalle de temps d'un circuit d'entrée au suivant.

Selon une autre caractéristique de l'invention, chaque circuit d'entrée comprend un circuit dit d'affectation qui est prévu pour scruter les signaux de disponibilité présents sur les m entrées dudit circuit d'entrée, pour délivrer, sur les m sorties dudit circuit d'entrée, des signaux de disponibilité remis à jour, et pour délivrer un signal de commande qui, lorsqu'il est actif, commande la mémorisation de la cellule présente sur l'entrée du circuit d'entrée.

Selon une autre caractéristique de l'invention, ledit circuit d'affectation comprend des entrées sur lesquelles sont délivrés des signaux de direction sortante marquant la sortie de la matrice de commutation à laquelle est destinée la cellule actuellement présente sur l'entrée du circuit d'entrée.

Selon une autre caractéristique de l'invention, ledit circuit d'affectation est constitué d'une pluralité de portes de type ET à au moins deux entrées, une première entrée desdites portes étant prévue pour recevoir les signaux de direction sortante et une seconde entrée étant prévue pour recevoir les signaux de disponibilité, les sorties desdites portes étant respectivement reliées aux entrées d'une porte de type OU dont la sortie constitue la sortie dudit circuit d'affectation, la sortie de chaque porte de rang j étant également reliée à la première entrée d'une porte de type OU dont la seconde entrée reçoit un signal de disponibilité, les sorties desdites portes de type OU étant respectivement reliées aux sorties du circuit d'affectation qui délivrent les signaux de disponibilité remis à jour.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un réseau de commutation équipé d'un système de files d'attente en entrée selon l'invention,
la Fig. 2 est un schéma synoptique d'un circuit d'entrée qui constitue un élément d'un système de files d'attente en entrée selon l'invention,
la Fig. 3 est un diagramme de fonctionnement d'un circuit d'entrée selon l'invention,
la Fig. 4 est un schéma synoptique d'un circuit d'affectation équipant un circuit d'entrée d'un système selon l'invention, et

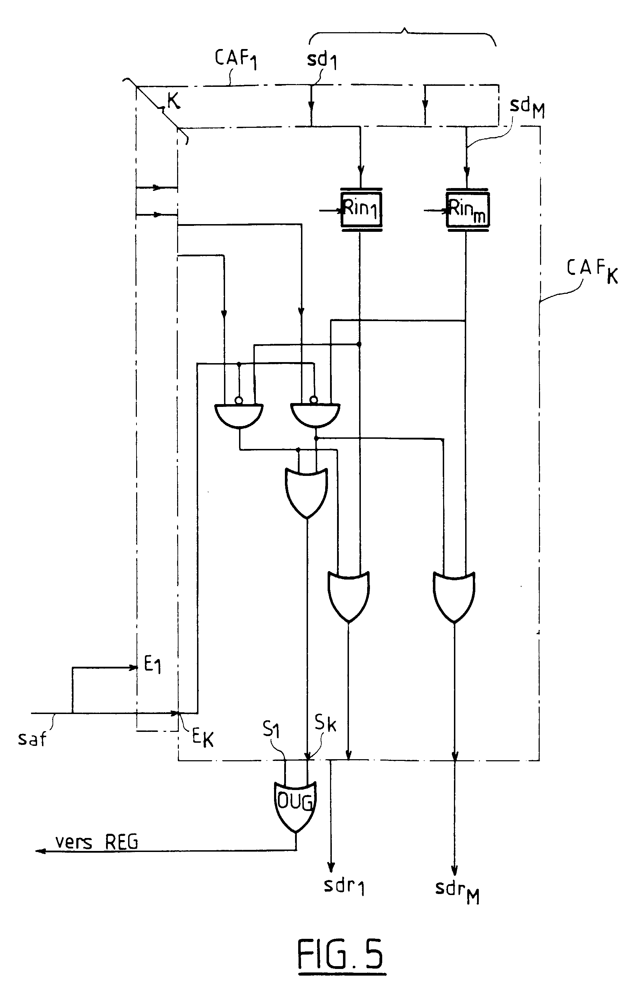

la Fig. 5 est un schéma synoptique d'une variante de réalisation d'un circuit d'affectation qui permet d'étendre les capacités d'un système selon l'invention.

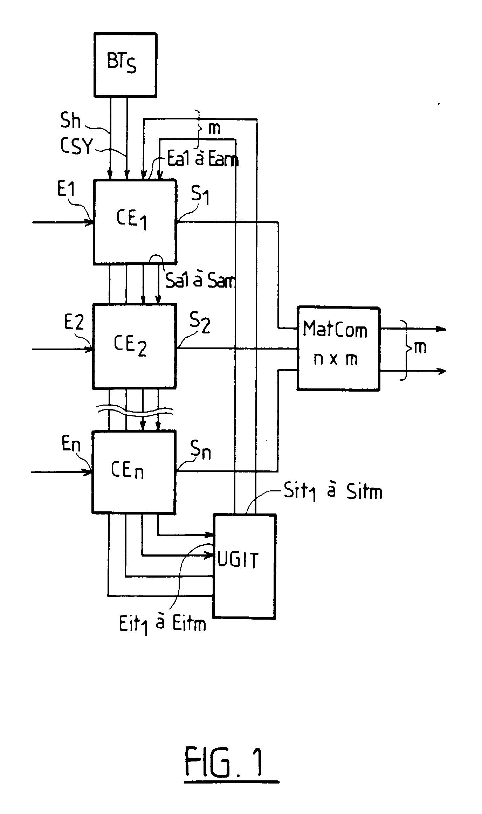

Le réseau de commutation représenté à la Fig. 1 est essentiellement constitué d'un système de gestion de files d'attente en entrée comprenant n circuits d'entrées CE₁ à CEₙ, une unité de gestion d'intervalles de temps UGIT et une base de temps, dite base de temps système BTₛ. Il est encore constitué d'une matrice de commutation MatCom.

Chaque circuit d'entrée CEᵢ est pourvu d'une entrée Eᵢ destinée à recevoir des cellules du type de celles qui sont utilisées dans un système de transmission de données et/ou un système du type ATM et qui sont constituées, d'une part, d'une partie dite en-tête dans laquelle sont stockées des informations relatives au système, notamment le numéro du circuit virtuel auquel elles appartiennent et, d'autre part, d'une partie où sont présents les messages à transmettre. De telles cellules sont notamment décrites dans le document de brevet EP-A-108 028.

Chaque circuit d'entrée CEᵢ est également pourvu d'une sortie Sᵢ qui est reliée à une entrée parmi n entrées de la matrice de commutation MatCom.

Celle-ci est du type sans blocage, notamment une matrice de commutation de type spatial sans blocages telle qu'une matrice de commutation dite de "BATCHER BANYAN" ou plus généralement telle qu'une matrice de commutation à réseau spatial sans blocages autres que ceux qui ont pour origine des conflits d'accès simultanés à une même sortie. La matrice de commutation MatCom ne comporte pas nécessairement n sorties et, dans la suite de la description, on considèrera même qu'elle en comporte m.

Chaque circuit d'entrée CEᵢ est encore pourvu de m entrées Ea₁ à Eaₘ en relation biunivoque avec les m sorties de la matrice de commutation MatCom et de m sorties Sa₁ à Saₘ correspondant aux m entrées. Chaque sortie Saⱼ d'un circuit d'entrée CEᵢ est reliée à l'entrée Eaⱼ du circuit d'entrée CE_{i + 1} suivant dans la succession des circuits d'entrée CE₁ à CEₙ.

L'unité de traitement d'intervalles de temps UGIT comporte, d'une part, m sorties Sit₁ à Sitₘ qui sont respectivement reliées aux m entrées Ea₁ à Eaₘ du premier circuit d'entrée CE₁ et, d'autre part, m entrées Eit₁ à Eitₘ respectivement reliées aux m sorties Sa₁ à Saₘ du dernier circuit d'entrée CEₙ.

La base de temps système BTs est prévue pour délivrer, d'une part, un signal d'horloge Sh de période k fois inférieure à la durée d'un temps cellule T et, d'autre part, un signal de synchronisation CSY de période égale à p fois la durée d'un temps cellule, par exemple huit fois la durée d'un temps cellule T. Le signal d'horloge Sh et le signal de synchronisation CSY sont délivrés au premier circuit d'entrée CE₁ et se propagent d'un circuit d'entrée CEᵢ au suivant CE_{i + 1}. Ils sont délivrés du dernier circuit d'entrée CEₙ à l'unité de traitement UGIT.

La fonction de l'unité UGIT sera explicitée ci-dessous.

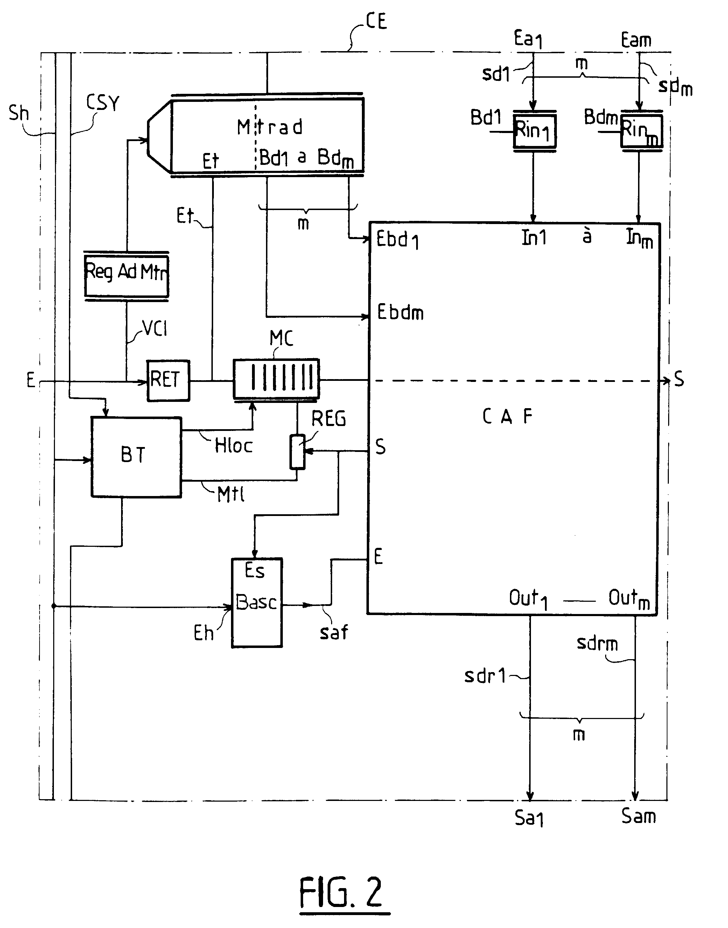

On va maintenant décrire un circuit d'entrée CEᵢ en relation avec la Fig. 2 qui en représente un schéma synoptique.

Le circuit d'entrée CE représenté comprend un registre RegAdMtr, une mémoire de traduction Mtrad, une mémoire de cellules MC, un circuit de retard RET, une base de temps BT, un circuit d'affectation CAF, et une bascule Basc.

La mémoire Mtrad est une mémoire du type mémoire à accès aléatoire dont les cases de mémorisation sont respectivement associées aux circuits virtuels que peut traiter le système. Dans chacune de ses cases, est stockée, à l'initialisation du système, une étiquette traduite Eₜ correspondant au circuit virtuel associé à ladite case et pouvant également comporter un supplément d'étiquette autodirectrice. Sont également stockés, dans chaque case associée à un circuit virtuel, des bits dits "de direction sortante" Bd₁ à Bdₘ en nombre m égal au nombre de sorties de la matrice de commutation MatCom et servant à définir, lorsqu'ils sont positionnés à un, la sortie de la matrice MatCom vers laquelle seront dirigées les cellules portant le numéro de circuit virtuel associé à ladite case.

Les bits Bd₁ à Bdₘ forment ensemble un signal de direction sortante dont la structure, dans d'autres modes de réalisation de l'invention, pourrait être différente, par exemple réalisée selon un codage binaire d'une direction sortante parmi m. Cette dernière solution permettrait de diminuer la quantité de mémoire de traduction nécessaire pour traduire l'information concernant la direction sortante, mais obligerait à l'utilisation d'un décodeur qui pourrait, par exemple, être intégré au circuit d'affectation CAF.

Les fils qui portent le numéro de circuit virtuel VCI auquel appartient la cellule présente sur l'entrée E sont reliés à l'entrée du registre RegAdMtr dont la sortie est reliée à l'entrée d'adressage en lecture de la mémoire de traduction Mtrad. En lecture, celle-ci délivre l'étiquette traduite Eₜ qui est alors fournie à l'entrée de la mémoire MC, ainsi que les bits Bd₁ à Bdₘ qui sont fournis aux entrées correspondantes du circuit d'affectation CAF.

Les fils autres que ceux qui portent le numéro de circuit virtuel, sont reliés, via un circuit de retard RET, à l'entrée de la mémoire MC. Le circuit de retard RET est prévu pour compenser les retards de temps introduits par la mémoire Mtrad.

La mémoire MC est une mémoire comportant un certain nombre de cases dont chacune est prévue pour mémoriser tous les bits d'une cellule.

La base de temps BT est pilotée par le signal d'horloge Sh délivré par la base de temps système BTs et est synchronisée par le signal CSY délivré par le circuit d'entrée CE précédent. Elle est prévue pour délivrer, d'une part, un signal d'heure locale Hloc et un signal de micro-intervalle de temps local Mtl. Alors qu'une unité de temps du signal d'heure locale Hloc correspond à un temps cellule Tₒ à Tₙ, le signal de micro-intervalle de temps est subdivisé, en un temps cellule Tᵢ, en k intervalles de temps prenant respectivement les valeurs Hloc + 1, pour le premier, Hloc + 2 pour le second, etc.

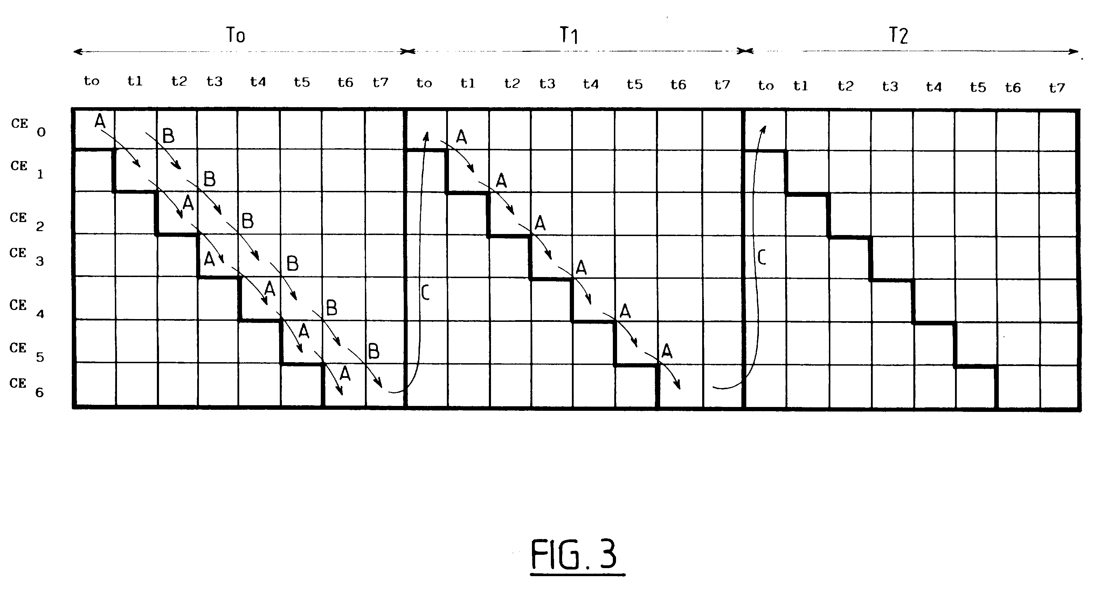

Sur la Fig. 3, on voit trois temps cellules Tₒ, T₁ et T₂ subdivisés, chacun, en micro-intervalles de temps tₒ à t₇. Ce repérage des temps est valable pour le premier circuit d'entrée CE₁ et il est décalé de la durée d'un micro-intervalle de temps pour un circuit d'entrée au circuit d'entrée suivant, comme le montrent les traits forts en marche d'escalier sur la Fig. 3.

On notera que k correspond aux nombres d'impulsions du signal d'horloge Sh engendré par la base de temps système BTₛ durant un temps cellule T. Comme on le comprendra par la suite, le nombre k correspond à la profondeur d'une file virtuelle d'entrée.

La base de temps BT d'un circuit d'entrée CEᵢ est prévue pour que son signal d'heure locale Hloc soit en retard d'un micro-intervalle de temps par rapport à la base de temps BT du circuit d'entrée précédent CE_{i - 1}. Pour ce faire, la base de temps BT d'un circuit d'entrée CEᵢ utilise le signal de synchronisation CSY transmis par le circuit d'entrée précédent CE_{i - 1} et transmet, au circuit suivant CE_{i + 1}, un nouveau signal de synchronisation CSY en retard d'un micro-intervalle de temps sur l'ancien.

De manière générale, la valeur prise par le signal de micro-intervalle de temps Mtl issu de la base de temps BT durant un temps tᵢ d'un temps cellule Tⱼ est la valeur du temps cellule T_{i + j + 1}. Ainsi, durant le temps cellule T₀, le signal d'intervalle de temps prend les valeurs T₁ au temps t₀, T₂ au temps t₁, etc. De même, durant le temps T₁, il prend les valeurs T₂ au temps t₀, T₃ au temps t₂, etc.

Chaque case de la mémoire MC est adressée en lecture par le signal d'heure locale Hloc délivré par la base de temps BT et est adressée en écriture par le signal en sortie d'un registre REG dont l'entrée reçoit le signal de micro-intervalle de temps Mtl délivré par la base de temps BT. Le registre REG a son entrée de commande qui est reliée à une sortie S du circuit d'affectation CAF.

Le circuit d'affectation CAF est pourvu de m entrées In₁ à Inₘ qui reçoivent, par l'intermédiaire de registres Rin₁ à Rinₘ respectivement commandés par les bits de direction sortante Bd₁ à Bdₘ, les signaux de disponibilité sd₁ à sdₘ délivrés par le circuit d'entrée précédent dans la succession ou délivrés, si le circuit d'entrée considéré est le premier de la succession, par l'unité de traitement d'intervalles de temps UGIT. Il est encore pourvu de m sorties Out₁ à Outₘ qui délivrent les signaux de disponibilité sdr₁ à sdrₘ remis à jour et délivrés aux m entrées Ea₁ à Eaₘ du circuit d'entrée suivant dans la succession ou, si le circuit d'entrée considéré est le dernier de la succession, aux entrées correspondantes de l'unité de traitement d'intervalles de temps UGIT. Il est pourvu de m entrées Ebd₁ à Ebdₘ qui reçoivent respectivement les m bits de direction sortante Bd₁ à Bdₘ délivrés par la mémoire de traduction Mtrad. La sortie S du circuit CAF est reliée à l'entrée de commande du registre REG. Le circuit CAF comporte encore une entrée sur laquelle est présent un signal d'affectation saf issu de la bascule Basc.

La bascule Basc a une entrée Es qui est reliée à la sortie S du circuit d'affectation CAF et a sa sortie, délivrant le signal d'affectation saf, qui est reliée à l'entrée E du circuit d'affectation CAF. Elle reçoit, sur son entrée Eh, le signal Sh de manière à être synchronisée avec ce signal et de manière à être remise à zéro au début de chaque temps cellule T. Lorsqu'un temps cellule, et ce à un temps tᵢ, a été affecté à la cellule présente sur l'entrée E du circuit d'entrée CE, le signal saf en sortie de la bascule Basc passe à un et ce niveau est maintenu jusqu'à la fin du temps cellule.

Le fonctionnement d'un circuit d'entrée CE selon l'invention est le suivant.

A l'arrivée d'une cellule sur l'entrée E, elle est stockée, avec son en-tête traduit et délivré par la mémoire Mtrad, dans une case de la mémoire MC, à une adresse déterminée de la manière suivante.

En même temps qu'elle délivre l'en-tête traduit Et, la mémoire Mtrad délivre les bits de direction sortante Bd₁ à Bdₘ dont l'un est à un niveau un marquant ainsi la sortie de la matrice MatCom sur laquelle la cellule entrante sera sortie.

Durant le temps cellule considéré, les entrées Ea₁ à Eaₘ sont scrutées par le circuit d'affectation CAF et ceci pendant chaque intervalle de temps t₀ à tₖ du temps cellule en cours.

Supposons que la cellule qui est actuellement traitée, soit destinée à la j^{ième} sortie de la matrice de commutation MatCom. Le bit de direction sortante Bdⱼ de rang j est donc à un niveau un.

Si, pendant l'intervalle de temps tᵢ, la j^{ième} entrée Eaj présente un niveau un, cela signifie que le temps cellule T_{a + i + 1} est occupé en ce qui concerne la j^{ième} sortie, a étant le rang du temps cellule actuellement en cours de traitement.

Au contraire, si la j^{ième} entrée Eaj présente un niveau zéro dans l'intervalle de temps tᵢ, cela signifie que le temps cellule T_{a + i + 1} est libre en ce qui concerne la j^{ième} sortie de la matrice de commutation MatCom. A ce temps tᵢ, le circuit d'affectation CAF délivre donc, sur sa sortie S, un signal qui commande le registre REG. Celui-ci délivre alors, à l'entrée d'écriture de la mémoire MC, le signal d'intervalle de temps Mtl délivré par la base de temps qui est, comme on l'a vu précédemment, égal à T_{a + i + 1}. La cellule est donc stockée à l'adresse de la mémoire MC correspondant à T_{a + i + 1}. Le circuit d'affectation CAF délivre également sur la sortie Outⱼ de rang j le signal sdrⱼ qui est maintenant à un, marquant ainsi une occupation du temps cellule T_{a + i + 1}.

Lorsque le circuit d'affectation CAF commande le registre REG, un niveau un est présent sur l'entrée Es de la bascule Basc. Le signal saf à sa sortie passe donc également à un et, ce, jusqu'à la fin du temps cellule en cours. Le circuit d'affectation CAF n'affecte donc plus de temps cellule à la cellule courante.

Pendant le temps cellule considéré Tₐ, la mémoire MC reçoit de la base de temps BT un signal d'adressage en lecture Hloc dont la valeur est égale à Tₐ. La cellule stockée à cette adresse dans la mémoire MC est donc délivrée à l'entrée correspondante de la matrice de commutation MatCom qui peut ainsi la traiter.

Les signaux de disponibilité sd sont transmis, avec un retard d'une durée égale à celle d'un micro-intervalle de temps, d'un circuit d'entrée au suivant et du dernier circuit d'entrée à l'unité de gestion d'intervalles de temps UGIT. Ce retard d'un micro-intervalle de temps est effectué par les registres Rin₁ à Rinₘ de chaque circuit d'entrée. Ce retard implique que les heures locales délivrées par les bases de temps BT des circuits d'entrée soient, comme on l'a vu précédemment, décalées de la durée d'un micro-intervalle de temps.

A la Fig. 3, on a représenté, par des flèches A, l'échange entre les circuits d'entrée CE₁ à CE₆ des mots constitués par la concaténation des signaux de disponibilité sd₁ à sdₘ pendant le premier micro-intervalle de temps t₀ et, par des flèches B, l'échange entre les circuits d'entrée CE₁ à CE₆ des mots constitués par la concaténation des signaux de disponibilité sd₁ à sdₘ pendant le second micro-intervalle de temps t₁.

L'unité de gestion d'intervalles de temps UGIT est prévue pour délivrer, à ces sorties correspondantes Sit₁ à Sitₘ et ce, au premier micro-intervalle t₀ d'un temps cellule T, les signaux de disponibilité sd₁ à sdₘ présents sur ses entrées Eit₁ à Eitₘ pendant le dernier micro-intervalle de temps du temps cellule précédent. A la Fig. 3, on a représenté par des flèches C cette fonction de l'unité UGIT.

On remarquera qu'à la Fig. 3, le nombre de micro-intervalles de temps est supérieur d'une unité au nombre de circuits d'entrée. Cela permet d'effectuer un décalage d'un micro-intervalle de temps de manière à ce que le mot présent pendant le premier intervalle de temps du temps cellule suivant marque toujours un état libre.

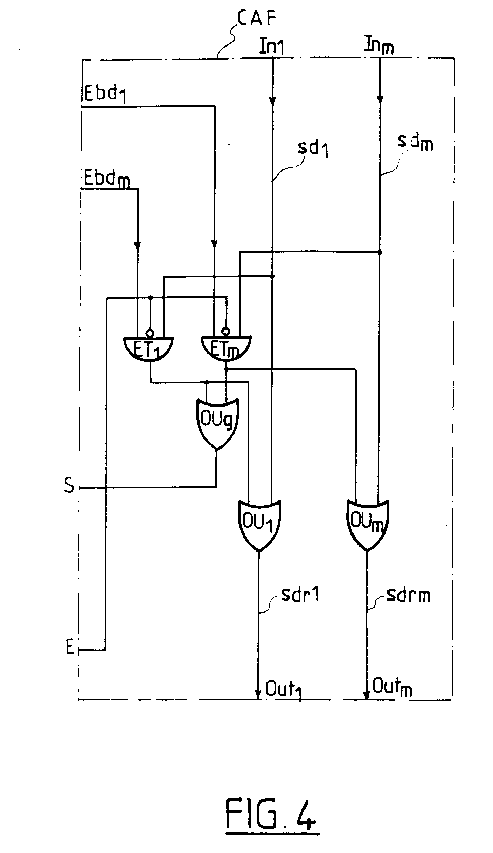

On a représenté à la Fig. 4 le schéma logique d'un circuit d'affectation CAF. Il est constitué de m portes ET₁ à ETₘ de type ET à trois entrées. La porte ETⱼ de rang j a une première entrée qui est reliée à l'entrée Ebdⱼ recevant le bit de direction sortante Bdⱼ de rang j, a une seconde entrée qui reçoit le bit de disponibilité sdⱼ de rang j et une troisième entrée, inverseuse, qui est reliée à l'entrée E qui est normalement reliée à la sortie de la bascule Basc. Les sorties des portes ET₁ et ETₘ sont respectivement reliées aux entrées d'une porte OU_{g} de type OU dont la sortie constitue la sortie S du circuit d'affectation CAF.

La sortie de la porte ETⱼ de rang j est également reliée à la première entrée d'une porte OUⱼ de type OU dont la seconde entrée reçoit le signal de disponibilité sdⱼ de rang j. Les sorties des portes OU₁ à OUₘ sont respectivement reliées aux sorties Out₁ à Outₘ.

Supposons qu'aucun temps cellule n'ait été encore affecté à la cellule entrante si bien que l'entrée E porte un niveau zéro.

Supposons que la cellule qui est actuellement traitée, soit destinée à la j^{ième} sortie de la matrice de commutation MatCom. Le bit de direction sortante Bdⱼ de rang j sur l'entrée Ebdⱼ est donc à un alors que les autres bits sont à zéro.

Si le j^{ième} signal de disponibilité sdⱼ présente un niveau un, la porte ETⱼ de rang j délivre un niveau un alors que les autres portes délivrent un niveau zéro.

La porte OU_{g} délivre alors un niveau un, ce qui a pour effet de commander le registre REG et le passage à un du signal saf à la sortie de la bascule Basc et donc de l'entrée E, et ce jusqu'à la fin du temps cellule. Il en résulte que, pendant toute cette période, les sorties de toutes les portes ET₁ à ETₘ sont à un niveau zéro.

On comprendra que la bascule Basc évite donc qu'une même cellule puisse être affectée à plusieurs temps cellule différents et par conséquent puisse être stockée à plusieurs adresses différentes de la mémoire MC.

Si le j^{ième} signal de disponibilité sdⱼ présente, contrairement au cas précédent, un niveau zéro, la porte ETⱼ de rang j délivre un niveau zéro et, comme toutes les autres portes ET₁ à ETₘ délivrent également un niveau zéro, la porte OU_{g} délivre un niveau zéro. La cellule n'est donc pas stockée à l'adresse correspondant à de micro-intervalle de temps pendant lequel le processus ci-dessus se produit.

On notera qu'afin de limiter le nombre de cases nécessaires pour la mémoire MC, on pourra utiliser une mémoire d'adressage indirecte prévue pour stocker l'adresse de mémorisation dans la mémoire MC de la cellule entrante, laquelle adresse est déterminée par un dispositif de détermination d'adresse disponible. L'ensemble d'une telle mémoire MC, d'une telle mémoire d'adressage indirecte et d'un tel dispositif de détermination d'adresse disponible est déjà décrit dans le brevet FR-A-2 617 302 et est tout à fait équivalent en fonctionnement et dans le cadre de la présente invention, à la mémoire MC décrite dans la présente description.

On notera que le circuit d'affectation pourrait être constitué de plusieurs circuits élémentaires tels que celui qui est représenté à la Fig. 4 incluant les registres Rin₁ à Rinₘ. On a représenté un tel circuit d'affectation comportant K circuits d'affectation élémentaires CAF₁ à CAF_{K} et leur interconnexion à un circuit d'entrée CE.

Les entrées E₁ à E_{K} de tous les circuits d'affectation CAF₁ à CAF_{K} sont reliées en parallèle pour y recevoir le signal d'affectation saf délivré par la bascule Basc du circuit d'entrée CE considéré. Une porte OU_{G} de type OU possède K entrées respectivement reliées aux sorties S des circuits d'affectation élémentaires et a sa sortie qui est reliée à l'entrée de commande du registre REG du circuit d'entrée considéré.

Les signaux de disponibilité sd₁ à sd_{M} au nombre de M = K x m sont répartis sur chacun des circuits élémentaires CAF₁ à CAF_{K} lesquels délivrent des signaux de disponibilité remis à jour sdr₁ à sdr_{M} au nombre de K x m.

## Revendications

1. Système de files d'attente en entrée prévu notamment pour être relié aux n entrées d'une matrice de commutation (MatCom) à m sorties, caractérisé en ce qu'il comporte une succession de n circuits d'entrée (CE₁ à CEₙ) dont des entrées respectives (E₁ à Eₙ) sont prévues pour recevoir des cellules du type de celles qui sont utilisées dans un système de transmission de données et/ou du type ATM et dont les sorties (S₁ à Sₙ) sont respectivement reliées aux entrées correspondantes de la matrice de commutation (MatCom), chaque circuit d'entrée (CE₁ à CEₙ) comportant encore m entrées (Ea₁ à Eaₘ) en relation biunivoque avec les sorties de la matrice de commutation (MatCom), chacune desdites entrées (Ea₁ à Eaₘ) portant, pendant chaque temps cellule, une série de signaux de disponibilité (sd₁ à sdₘ) auxquels sont respectivement affectés des temps cellule postérieurs au temps cellule en cours, chaque signal de disponibilité (sdⱼ) marquant un état de disponibilité de la sortie de la matrice (MatCom) qui correspond à l'entrée (Eaⱼ) qui le porte pour l'émission d'une cellule au temps cellule qui est affecté audit signal, chaque circuit d'entrée (CEᵢ) comprenant des moyens pour mémoriser, dans une case d'une mémoire (MC), une cellule qui est présente sur son entrée (Eᵢ) à une adresse qui est en relation avec un temps cellule affecté à un signal de disponibilité (sd₁ à sdₘ) marquant un état disponible pour l'émission de ladite cellule sur la sortie de la matrice (MatCom) à laquelle est destinée ladite cellule, ledit signal de disponibilité (sd) marquant alors, après ladite mémorisation, un état de non-disponibilité, et des moyens pour lire ladite mémoire (MC) à une adresse correspondant au temps cellule en cours afin de délivrer, à ladite matrice de commutation (MatCom), la cellule qui est stockée à cette adresse.

2. Système selon la revendication 1, caractérisé en ce que, dans chaque circuit d'entrée (CE₁ à CEₙ), les signaux de disponibilité (sd₁ à sdₘ) portés, pendant un temps cellule, par une entrée (Ea₁ à Eaₘ) sont respectivement présents sur ladite entrée pendant des micro-intervalles de temps (t₀ à tₖ) qui subdivisent chaque temps cellule et auxquels sont respectivement affectés les temps cellule postérieurs au temps cellule en cours.

3. Système selon la revendication 2, caractérisé en ce que lesdits micro-intervalles (t₀ à tₖ) sont déterminés par des signaux (Mtl) délivrés par une base de temps (BT), l'adresse de mémorisation de la cellule présente sur l'entrée (Eᵢ) dudit circuit d'entrée (CEᵢ) étant déterminée à partir de la valeur prise par lesdits signaux de micro-intervalle de temps (Mtl) lorsque le signal de disponibilité (sdⱼ) sur l'entrée (Eaⱼ) correspondant à la sortie de la matrice de commutation (MatCom) à laquelle est destinée la cellule en cours marque un état disponible.

4. Système selon la revendication 3, caractérisé en ce que chaque circuit d'entrée (CE₁ à CEₙ) comprend une mémoire (MC) pour mémoriser la cellule qui est présente sur son entrée (E₁ à Eₙ), ladite mémoire (MC) étant adressée en lecture par un signal d'heure locale (Hloc) délivrée par ladite base de temps (BT), lesdits signaux de micro-intervalle de temps (Mtl) délivrés par la base de temps (BT) adressant ladite mémoire (MC) en écriture.

5. Système selon une des revendications précédentes, caractérisé en ce qu'il comporte des moyens (Basc) pour empêcher la mémorisation d'une cellule déjà mémorisée.

6. Système selon une des revendications précédentes, caractérisé en ce que chaque circuit d'entrée (CE₁ à CEₙ) est pourvu de m sorties (Sa₁ à Saₘ) correspondant aux m entrées (Ea₁ à Eaₘ) et sur lesquelles sont délivrés des signaux de disponibilité remis à jour (sdr₁ à sdrₘ), les m sorties (Sa₁ à Saₘ) d'un circuit d'entrée (CEᵢ) étant reliées aux m entrées (Ea₁ à Eaₘ) du circuit d'entrée (CE_{i + 1}) suivant dans la succession de circuits d'entrée.

7. Système selon la revendication 6, caractérisé en ce que les signaux de disponibilité remis à jour (sdr₁ à sdrₘ) délivrés sur les m sorties (Sa₁ à Saₘ) d'un circuit d'entrée (CEᵢ) sont transmis aux m entrées (Ea₁ à Eaₘ) du circuit d'entrée (CE_{i + 1}) suivant dans la succession avec un retard d'une durée égale à celle d'un micro-intervalle de temps, la base de temps (BT) d'un circuit d'entrée (CEᵢ) étant décalée de la durée d'un micro-intervalle de temps d'un circuit d'entrée au suivant dans la succession.

8. Système selon une des revendications 6 ou 7, caractérisé en ce que chaque circuit d'entrée (CEᵢ) comprend un circuit (CAF) dit d'affectation qui est prévu pour scruter les signaux de disponibilité (sd₁ à sdₘ) présents sur les m entrées (Ea₁ à Eaₘ) dudit circuit d'entrée (CE), pour délivrer, sur les m sorties (Sa₁ à Saₘ) dudit circuit d'entrée, des signaux de disponibilité remis à jour (sdr₁ à sdrₘ), et pour délivrer, sur une sortie (S), un signal de commande qui, lorsqu'il est actif, commande la mémorisation dans la mémoire (MC) de la cellule présente sur l'entrée (Eᵢ) du circuit d'entrée (CEᵢ).

9. Système selon la revendication 6, caractérisé en ce que ledit circuit d'affectation (CAF) comprend des entrées (Ebd₁ à Ebdₘ) sur lesquelles sont délivrés des signaux de direction sortante (Bd₁ à Bdₘ) marquant la sortie de la matrice de commutation (MatCom) à laquelle est destinée la cellule actuellement présente sur l'entrée (Eᵢ) du circuit d'entrée (CEᵢ).

10. Système selon une des revendications précédentes, caractérisé en ce que ledit circuit d'affectation (CAF) est constitué de m portes (ET₁ à ETₘ) de type ET à au moins deux entrées, une première entrée desdites portes (ET₁ à ETₘ) étant prévue pour recevoir les signaux de direction sortante (Bd₁ à Bdₘ) et une seconde entrée étant prévue pour recevoir les signaux de disponibilité (sd₁ à sdₘ), les sorties desdites portes (ET₁ et ETₘ) étant respectivement reliées aux entrées d'une porte (OU_{g}) de type OU dont la sortie constitue la sortie (S) du circuit d'affectation (CAF), la sortie de chaque porte (ETⱼ₎ de rang j étant également reliée à la première entrée d'une porte (OUⱼ) de type OU dont la seconde entrée reçoit le signal de disponibilité (sdⱼ) de rang j, les sorties des portes (OU₁ à OUₘ) étant respectivement reliées aux sorties (Out₁ à Outₘ) du circuit d'affectation qui délivrent les signaux de disponibilité remis à jour (sdr₁ à sdrₘ).

## Patentansprüche

1. Anordnung für Warteschlangen zur Verwendung in der Eingangsstufe insbesondere für die Verbindung mit den n Eingängen einer Umschaltmatrix (MatCom) mit m Ausgängen, dadurch gekennzeichnet, daß sie eine Aufeinanderfolge von n Eingangs kreisen (CE₁ bis Ceₙ) umfaßt, deren jeweiligen Eingänqe (E₁ bis Eₙ) vorgesehen sind, um Zellen vom Typ jener, die in einem Datenbertragungssystem verwendet werden, und/oder vom Typ ATM aufzunehmen und deren Ausgänge (S₁ bis Sₙ) jeweils mit den entsprechenden Eingängen der Umschaltmatrix (MatCom) verbunden sind, wobei jeder Eingangskreis (CE₁ bis Ceₙ noch m Eingänge (Ea₁ bis Eaₙ) in eindeutiger Verbindung mit den Ausgängen der Umschaltmatrix (MatCom) umfaßt, wobei jeder der Eingänge (Ea₁ bis Eaₘ) während jeder Zellzeit eine Reihe von Belegungszeichen (sd₁ bis sdₘ trägt, denen jeweils Zellzeiten nach der laufenden Zellzeit zugeordnet sind, wobei jedes Belegungszeichen (sdⱼ) einen Belegungszustand des Ausganges der Matrix (MatCom) bezeichnet, der dem Eingang (Eaj) entspricht, der es für die Aussendung einer Zelle zur Zellzeit, die dem Zeichen zugeordnet ist, trägt, wobei jeder Eingangskreis (CEⱼ) Mittel umfaßt, um in einem Feld eines Speichers (MC) eine Zelle zu speichern, die an seinem Eingang (Eⱼ) an einer Adresse vorhanden ist, die mit einer Zellzeit in Verbindung steht, die einem Belegungszeichen (sd₁ bis sdₘ) zugeordnet ist, das einen Belegungszustand für die Aussendung der Zelle an dem Ausgang der Matrix (MatCom), für den die Zelle bestimmt ist, bezeichnet, wobei das BeLegungszeichen (sd) nun nach der Speicherung einen Richt-Belegungszustand bezeichnet und Mittel zum Lesen des Speichels (MC) an einer Adresse, die der laufenden Zellzeit entspricht, umfaßt, um der Umschaltmatrix (MatCom) die Zelle zu liefern, die an dieser Adresse gespeichert ist.

2. System nach Anspruch 1, dadurch gekennzeichnet, daß in jedem Eingangskreis (CE₁ bis CEₙ) die Belegungszeichen (sd₁ bis sdₘ), die während einer Zellzeit von einem Eingang (Ea₁ bis Eaₘ) getragen werden, jeweils an dem Eingang während Mikro-Zeitintervalle (t₀ bis tₖ) vorhanden sind, die jede Zellzeit unterteilen und denen jeweils die Zellzeiten nach der laufenden Zellzeit zugeordnet sind.

3. System nach Anspruch 2, dadurch gekennzeichnet, daß die Mikroinrervalle (t₀ bis tₖ) durch Signale (Mtl) bestimmt werden, die von einer Zeitbasis (BT) geliefert werden, wcbei die Speicheradresse der Zelle an dem Eingang (Eⱼ) des Eingangskreises (CEⱼ) ausgehend von dem Wert bestimmt wird, den die Signale der Mikro-Zeitintervalle (Mtl) angenommen haben, wenn das Belegungszeichen (sdjl am Eingang (Eaⱼ), das dem Ausgang der Umschaltmatrix (MatCom), für die die laufende Zelle bestimmt ist, entspricht, einen Belegungszustand anzeigt.

4. System nach Anspruch 3, dadurch gekennzeichnet, daß jeder Eingangskreis (CEⱼ bis CEₙ) einen Speicher (MC) zur Speicherung der Zelle, die an seinem Eingang (E₁ bis Eₙ) vorhanden ist, umfaßt, wobei der Speicher (MC) im Lesemodus durch ein lokales Zeitsignal (Hloc) adressiert wird, das von der Zeitbasis (BT) geliefert wird, wobei die Signale der Mikro-Zeitintervalle (Mtl), die von der Zeitbasis (BT) geliefert werden, den Speicher (MC) im Schreibmodus adressieren.

5. System nach einem der vorhergehenden Ansprüche, dadurch gekennzeichnet, daß es Mittel (Basc) zur Verhinderung der Speicherung einer bereits gespeicherten Zelle umfaßt.

6. System nach einem der vorhergehenden Ansprüche, dadurch gekennzeichnet, daß jeder Eingangskreis (CE₁ bis CEₙ) mit m Ausgängen (Saₗ bis Saₘ) versehen ist, die den m Eingängen (Ea₁ bis Eₐₘ) entsprechen und an die aktualisierten Belegungszeichen (sdr₁ bis sdrₘ) geliefert werden, wobei die m Ausgänge (Sa₁ bis saₘ) eines Eingangskreises (CEⱼ) mit den m Eingängen (Ea₁ bis Eaₘ) des folgenden Eingangskreises (CEⱼ₊₁) in der Abfolge von Eingangskreisen verbunden sind.

7. System nach Anspruch 6, dadurch gekennzeichnet, daß die aktualisierten Belegungszeichen (sdr₁ bis sdrₘ), die an die m Ausgänge (Sa₁ bis Saₘ,) eines Eingangskreises (CEⱼ) geliefert werden, an die m Eingänge (Ea₁ bis Eaₘ) des folgenden Eingangskreises (CEⱼ₊₁) in der Abfolge geliefert werden, mit einer Verzögerung von einer Dauer gleich jener eines Mikro-Zeitintervalls, wobei die Zeitbasis (BT) eines Eingangskreises (CEⱼ) um die Dauer eines Mikro-Zeitintervalles von einem Eingangskreis zum nachfolgenden in der Abfolge verschoben ist.

8. System nach einem der Ansprüche 6 oder 7, dadurch gekennzeichnet, daß jeder Eingangskreis (Ceⱼ) einen sogenannten zuteilungskreis (CAF) umfaßt, der vorgesehen ist, um die Belegungszeichen (ad₁ bis adₘ), die an den m Eingängen (Ea₁ bis Eaₘ) des Eingangskreises (CE) vorhanden sind, abzufragen, um an die m Ausgänge (Sa₁ bis saₘ) des Eingangskreises aktualisierte BelegungsZeichen (sdr₁ bis sdrₘ) zu senden, und um an einen Ausgang (s) ein Steuersignal zu senden, das, wenn es aktiv ist, die Speicherung der an dem Eingang (Eⱼ) des Eingangskreises (CEⱼ) vorhandenen Zelle in dem Speicher (MC) speichert.

9. System nach Anspruch 6, dadurch gekennzeichnet, daß der Zuteilungskreis (CAF) Eingänge (Ebd₁ bis Ebdₘ) umfaßt, an die Signale in Ausgangsrichtung (Bd₁ bis Bdₘ) geliefert werden, die den Ausgang der Umschaltmatrix (MatCom) kennzeichnen, für die die derzeit an dem Eingang (Eⱼ) des Eingangskreises (CEⱼ) vorhandene Zelle bestimmt ist.

10. System nach einem der vorhergehenden Ansprüche, dadurch gekennzeichnet, daß der Zuteilungskreis (CAF) von m Türen (ET₁ bis ETₘ) vom Typ ET mit mindestens zwei Eingängen gebildet wird, wobei ein erster Eingang dieser Türen (ET₁ bis Etₘ) vorgesehen ist, um die Signale in Ausgängsrichcung (Bd₁ bis Bdₘ) aufzunehmen, und ein zweiter Eingang vorgesehen ist, um die Belegungszeichen (sd₁ bis sdₘ) aufzunehmen, wobei die Ausgänge dieser Türen (ET₁ bis Etₘ) jeweils an die Eingänge einer Türe (OUⱼ) vom Typ OU angeschlossen ist, deren Ausgang den Ausgang (S) des Zuteilungskreises (CAF) bildet, wobei der Ausgang jeder Türe (ETⱼ) vom Rang j auch mit dem ersten Eingang einer Türe (OUⱼ) vom Typ OU verbunden ist, deren zweiter Eingang das Belegungszeichen (sdⱼ) vom Rang j aufnimmt, wobei die Ausgänge der Türen (OU₁ bis OUₘ) jeweils mit den Ausgängen (Out₁ bis Outₘ) des Zuteilungskreises verbunden sind, die die aktualisierten Belegungszeichen (sdr₁ bis sdrₘ liefern.

## Claims

1. Waiting queue system to be used at the input stage for connection to n inputs of a switching matrix (MatCom) with m in outputs, whereby it comprises a series of n input circuits (CE₁, to CEₙ ) with respective inputs (E₁ to Eₙ) designed to take cells of a type used in a data transmission system and/or type ATM, whose outputs (S₁ to Sₙ are respectively connected to the corresponding inputs of the switching matrix (MatCom), each input circuit (CE₁to CEₙ) also comprising m input (Ea₁ to Eaₘ) related on a one-to-one basis With the outputs of the switching matrix (MatCom), each of the said inputs (Ea₁ to Eaₘ) carrying a series of availability signals (sd₁ to sdₘ) during each cell time, with assigmnent to these of cell times after the cell time in progress, each availability signal (Sdⱼ ) indicating available status of the matrix output (MatCom) corresponding to the input (Eaⱼ) carrying it for transmission of cell at the cell time assigned to the said signal, each input circuit (CEⱼ) comprising a means of storing in a memory (MC), in the same segment, a cell present on its input (CE₁) at an address retating to a cell time assigned to an availability signal (sd₁ to sdₘ ) indicating available status for transmission of the said cell to the output of the matrix (MatCom) for which the said cell is intended, the said availability signal (sd) then, After storage in memory, indicating a non-available status, and a means of reading the said memory (MC) to an address corresponding to the cell time in progress in order to transmit the cell stored at that address to the switching matrix (MatCom)

2. Arrangement as per claim 1, whereby in each input circuit (CE₁, to CEₙ), availability signals (sd₁ to sdₘ) carried by an input (Ea₁ to Eaₘ) , during one cell time, are present on the said input for micro-intervals of time (t₀ to tₖ) which subdivide each cell time and to which cell times after the cell time in progress are assigned, respectively.

3. Arrangement as per claim 2, whereby the said micro-intervals (t₀ to tₖ) are determined by signals (Mtl) relayed by a time base (BT), the memory address of the cell present on the input (E) of this input circuit (CE₁) being determined from the value taken by the said micro-interval of time signals (Mtl) when the availability signal (sdⱼ) on the input (Eaⱼ) corresponding to the output of the switching matrix (MatCom) to which the cell in progress is destined indicates an available status.

4. Arrangement as per claim 3, whereby each input circuit (CE₁ to CEₙ) has a memory (MC) for storing the cell present on its input (E₁, to Eₙ) , this memory (MC) being addressed in road mode by a local time signal (Hloc) relayed by the said time base, these micro-interval of time signals (Mtl) relayed by the time base (BT) thus addressing the said memory (MC) in write mode.

5. Arrangement as per one of the above claims, whereby it comprises a means (Basc) of inhibiting storage in memory of a cell already stored.

6. Arrangement as per one of the above claims, whereby each input circuit (CE₁ to CEₙ) has m outputs (Sa₁ to Saₘ ) corresponding to the m inputs (Ea₁ to Eaₙ) , to which updated availability signals (adr₁ to adrₘ ) are relayed, the m outputs (Sa₁ to Saₘ) of an input circuit (CE₁) being connected to m inputs (Ea₁ to Eaₘ ) of the next input circuit (CE₁₊₁) in the input circuit sequence.

7. Arrangement as per claim 6, whereby the updated availability signals (adr₁ to adrₘ ) relayed to the m outputs (Sa₁ to Saₘ) of an input circuit (CE₁) are transmitted to the m inputs (Ea₁ to Eaₘ) of the next input circuit (CE₁₊ⱼ) in the sequence with a delay equivalent to that of one micro-interval of time, the time base (BT) of an input circuit (CE₁) being shifted by the duration of one micro-interval of time from one input circuit to the next.

8. Arrangement as per one of claims 6 or 7, whereby each input circuit (CE) comprises a so-called Assignment circuit (CAF) which is designed to scan the availability signals (adr₁ to adrₘ) present on the m inputs (Ea₁ to Eaₘ) of the said input circuit (CE), to relay updated availability signals (adr₁ to adrₘ) on the m outputs (Sa₁ to Saₘ) of the said input circuit, and to relay to an output (S) a control signal which, when active, enables storage in memory (MC) of the cell present on the input (E₁) of the input circuit (CE₁).

9. Arrangement as per claim 6, whereby the said assignment circuit (CAF) comprises inputs (Ebd₁ to Ebdₘ ) to which outgoing signals (Bd₁, to Bdₘ) are relayed indicating the output of the switching matrix (MatCom) to which the cell currently present on the input (E₁) of the input circuit (CE₁) is to be sent.

10. Arrangement as per one of the above claims whereby the said assignment circuit (CAF) consists of m AND type gates (ET₁ to ETₘ ) and at least two inputs, an initial input of the said gates (ET₁ to ETₘ) being designed to receive outgoing signals (Bd₁ to Bdₘ) and a second input being designed to receive availability signals (adr₁ to adrₘ), the outputs of the said gates (ET₁ to ETₘ) being connected, respectively, to the inputs of an OR type gate (OUₛ) whose output forms the output (S) of the assignment circuit (CAF), the output of each j rank gate (ETⱼ) also being linked to the first input of an OR type gate (OUⱼ) whose second input receives an availability signal (adⱼ) of rank j, the outputs of the gates (OUₗ to OUₘ) being connected, respectively, to the outputs (Outₗ to Outₘ) of the assignment circuit relating updated availability signals (adrₗ to adrₘ ).
